# EUROPEAN PATENT APPLICATION

(11) **EP 0 894 699 A2**
(43) Date of publication of application: **03.02.1999**
(21) Application number: 98113944.7
(22) Date of filing: 24.07.1998
(51) Int. Cl.: B62J 6/00

(54) **Headlight for a motorcycle, a small motorcycle or similar, made up of two superimposed poly-elipsoidal or elipsoidal assembly units**

(30) Priority: 29.07.1997 IT MI970575 U
(71) Applicant: Cagiva Motor S.p.A., 21100 Varese (IT)
(72) Inventor: Parenti, Massimo, 47900 Rimini (IT)
(74) Representative: Giambrocono, Alfonso, Dr. Ing.

(57) **Abstract**

A front optical or headlight assembly unit for a motorcycle includes at least two light emitting units associated with a relevant support. These units are poly-elipsoidal or elipsoidal headlights, these last ones being superimposed and substancially lying in an average longitudinal vertical plane of a motorcycle.

## Description

It is the object of this discovery a front optical or headlight assembly unit for motorcycles according to preamble of principal claim.

Usually, front optical assembly unit of a motorcycle, is made up of parabolic reflector headlights: high beam, low beam and identification light, placed in a horizontal direction and in some cases in a vertical direction. There are also motorcycles that show "mixed" optical assembly units, that is a poly-elipsoidal or elipsoidal headlight reflector (low beam one) and high beam one of conventional parabolic type.

Horizontal dimensions of these light emitting devices, cause a great increase in dimensions in front part of motorcycle, with problems to get a streamlined front dome. Problems of overall dimensions also arise at time of adjustment (rotation of headlights with reference to a horizontal axis and to a vertical one, which is not always possible with known optical assembly units), and also influence value of maximum steering angle with subsequent problems in motorcycle maneuverability.

Same inconviences there are also in the vertical placement, owing to great dimensions of conventional paraboles.

In addition, dimensional developement in depth of above mentioned optical assembly parts also involves room problems at the back of them and prevents, sometimes, an easy placement of instruments assembly unit (dashboard) of vehicle.

Problems also show up at homologation, because requirement of symmetry in front optical assembly unit with reference to average longitudinal plane of motor vehicle, can involve (for example in horizontal arrangement) even a doubling of number of light devices and a consequent further increase of overall dimensions.

Purpose of this discovery is that to provide an optical or headlight assembly unit for a motorcycle of an improved type with reference to known solutions.

In particular, purpose of this discovery is that of providing an optical assembly unit of mentioned type that allows homologation in all countries of the world, because it complies with requirement of symmetry with reference to longitudinal average axis in vehicle centerline.

An other purpose of this discovery is that to provide an optical assembly unit of mentioned type that allows a better vehicle drivability, especially when maneuvering, by means of a greater angular range around steering axis of front fork assembly unit of motorcycle.

An other purpose of this discovery is that to provide an optical assembly unit of mentioned type that allows an easy control both going to a higher position (with reference to a horizontal axis) and going to sides (with reference to a vertical axis) of its light emitting parts, in order to be able to obtain its homologation in countries in which these controls are both required.

This and other purposes that will become apparent to those skilled in the art are reached by an optical assembly unit or headlight of a motorcycle, either small one or similar, according to enclosed claims.

For a better understanding of present discovery, we enclose, for a simply indicative reason, but not a restrictive one, following drawing, in which:

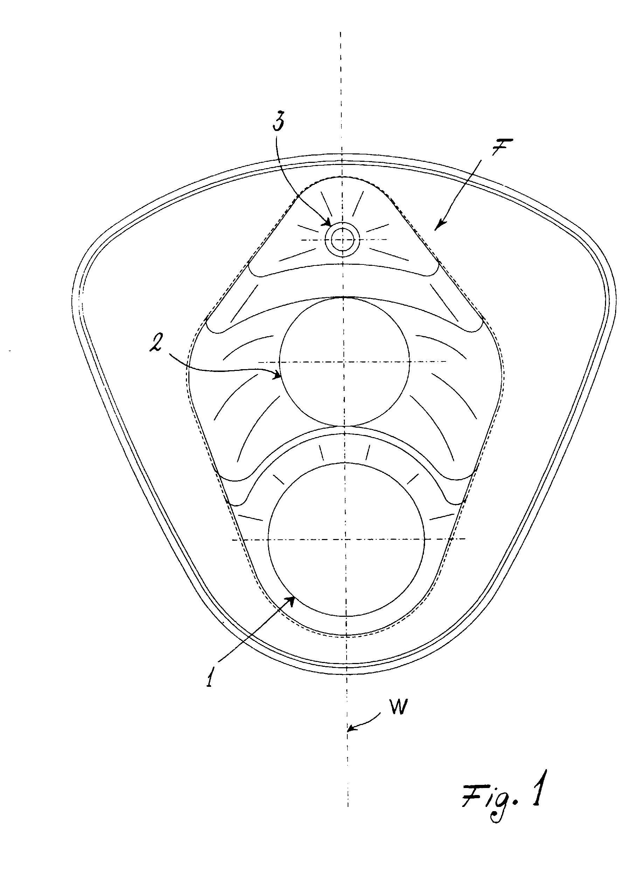

figure 1 shows a front view of optical asembly unit or headlight according to this discovery;
figure 2 shows a side view, partially cross section, of unit of figure 1 and of headlight holder box to which it is associated;

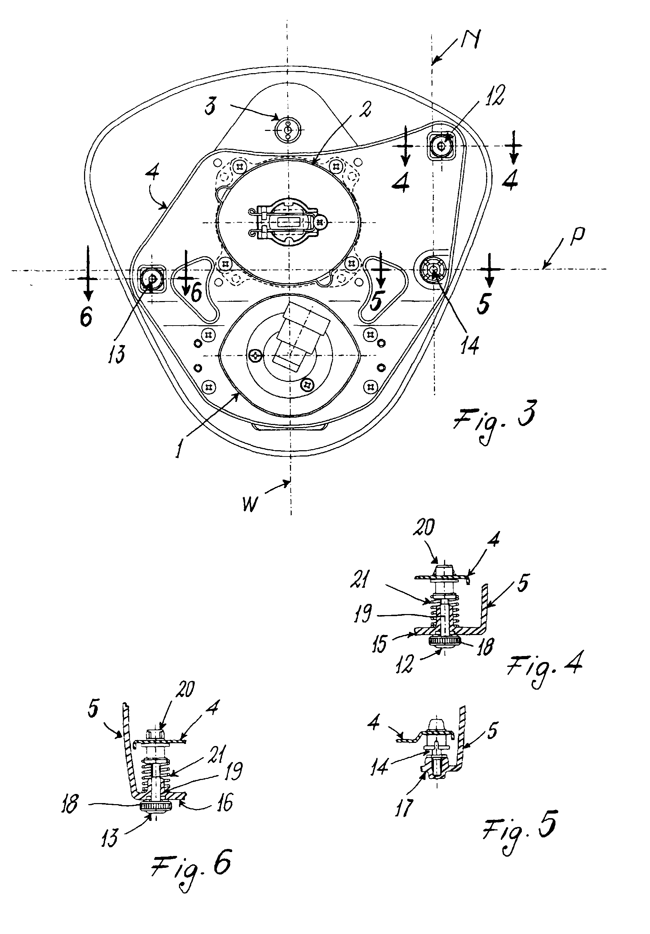

figure 3 shows a back view of optical assembly unit of figure 1; and
figures from 4 to 6 show sections respectively along lines 4-4, 5-5 and 6-6 of figure 3.

With reference to mentioned figures, an optical assembly unit or headlight F is shown for a motorcycle including a high beam headlight 1, a low beam headlight 2 and identification light 3. Headlight 1 and that 2 are of poly-elipsoidal or elipsoidal type. These light emitting units are substancially placed on an average longitudinal vertical plane W of vehicle; by this definiotion we indicate that longitudinal axis K, K1 and K2 of headlights 1 and 2 and of light 3 lay (substancially) on this plane. Case in which there are two identification lights placed in sides and in a simmetrical position with reference to average plane of motor vehicle, is to be thought falling within the scope of present document.

Light emitting parts above indicated (headlights and identification lights) are associated with a support unit 4 substancially plate shaped and are placed inside of a headlight holder box 5. This last one is attached by means of usual attachment means 6 to sleeve of steering rod 7 of vehicle, with an axis V defining axis of steering, to which a usual front fork unit is associated (turning in known way), not shown here.

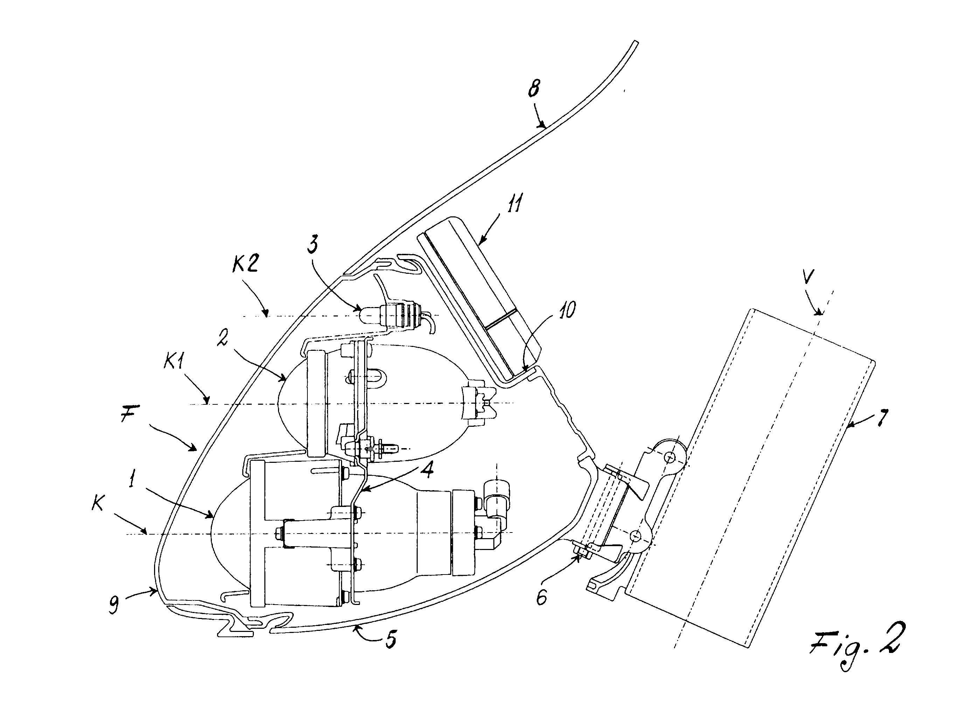

Headlight holder box 5 is to its turn associated to a usual front dome 8 of a motorcycle or to any other kind of equivalent fairing. In box 5, in upper part of figure 2, is provided with good advantage a reduction 10 in which an instrument unit (dashboard) 11 of vehicle is placed, in itself well known. This box finally shows an outside lens 9 capable to allow diffusion in environment of emitted light by headlights 1 and 2 or by identification light 3. As previously said, these last ones are associated with a support part 4 which shows usual and known mechanical and electrical connections for headlights 1,2 and light 3. This part 4 is attached to box 5 by means of attachment parts 12 and 13 (screws) cooperating with shelf type arms 15 and 16 associated to this box and by means of a spherical shaped hub 14 which is also associated to a related shelf type arm 17. Advantageously, screws 12, 13 are of an adjustable type and their operation allows the change of direction of light beam with reference to a horizontal axis P (perpendicular to plane W) and a vertical one N. Said adjustment can also be carried out by means of other parts like for example hubs with possibility of relocation (discreet adjustment), flexible cable system, and other equivalent units.

More in details, each screw 12, 13 includes an adjustment knob associated with a threaded rod capable to cooperate with a compensating bushing 20 (or other similar part), associated with support 4, showing a threaded housing. Around this rod a contrast spring 21 is provided acting, to one side , on part 5 and to other side on support 4, by means of above mentioned bushing 20. By acting on knob 18 of screw 12 rod is screwed in housing 20 and part 4 is turned around hub 14 and afterwards around axis P; by acting on knob 18 of screw 13 rotation of part 4 is obtained around axis N. We here notice that this simple system of adjustment of headlight unit allows an easy adjustment both going up ( with reference to horizontal axis P) and sideways (with reference to vertical axis N), and this allows homologation in countries in which this possibility of adjustment is required (for example in U.S.A.). Said adjustment is obtained with small overall dimensions variations (owing to compactness) in contrast with usual front headlight units that extend in a horizontal direction.

Thanks to this discovery a decrease in overall dimensions is obtained of optical assembly unit and a great compactness of it (comparing with known solutions). Decrease in overall dimensions, allows also to obtain a greater steering angle and consequently a greater drivability, especially when maneuvering, because front fork unit , associated to steering axis (v), has more room in its own angular movement around same steering axis.

It is to be remarked that there is also possibility to have low beam light and light of identification incorporated one in the other, that is having separate emitting lights, but having common light emitting surfaces and housing.

Finally this solution allows an innovative stylistic configuration of front part of vehicle that, in motorcycle field is not of a secondary importance.

## Claims

1. Optical front assembly unit or headlight (F) for motorcycles, small ones or similar including at least two light emitting units (1,2) associated to a relevant support (4), characterized in that these units (1,2) are poly-elipsoidal or elipsoidal headlights, these last ones being superimposed and substancially lying on an average longitudinal plane (W) of motorcycle.

2. Optical assembly unit as illustrated in claim 1, characterized in that a further emitting light unit or identification light (3) is included also this one substancially placed in a longitudinal vertical average plane of vehicle.

3. Optical assembly unit as illustrated in claim 1, characterized in that two further emitting light units or identification lights are included placed at sides and in a simmetric position with reference to average longitudinal vertical plane (W) of vehicle.

4. Optical assembly unit as illuatrated in claim 1, characterized in that one of these light emitting units includes a further emitting light unit or identification light (3), these units (2,3) having separate light emitting sources, but having common light emitting surfaces and housing.

5. Optical asssembly unit as illustrated in claim 1, characterized in that support (4) of light emitting units (1,2,3), is provided with means for adjustment of its spacial location around two axis (P) and (N) perpendicular one to the other, first one perpendicular to longitudinal plane (W) of motorcycle and second one (N) parallel to it, going through a connection unit of this support and a headlight holding box (5).

6. Optical assembly unit as illustrated in claim 5,characterized in that connecting unit is a spherical shaped hub (14) operating as a pivot for support (4) adjustment.

7. Optical assembly unit as illustrated in claim 6, characterized in that adjustment means are adjustable attachment means like screws, hubs with relocation possibility, flexible cables or similar, cooperating with parts associated with support (4) and with headlight holder box (5) containing light emitting units (1,2,3).

8. Optical assembly unit as illustrated in claim 6, characterized in that headlight holding box (5) shows a housing (10) for an instrument assembly unit (121) of vehicle.

9. Optical assembly unit as illustrasted in claim 6, characterized in that headlight holder box (5) is attached to steering unit sleeve of motorcycle, around it being possible to move angularly steering assembly unit of vehicle.

10. Optical assembly unit as illustrated in claim 6, characterized in that headlight holding box (5) is attached to dome or to an other fairing of motorcycle and detached from motor vehicle chassis, around it being possible to move angularly steering assembly unit of vehicle.

11. Optical assembly unit as illustrated in claim 9, 10, characterized in that steering assembly unit is capable to steer or to move angularly with reference to headlight holding box of an angle equal to at least ±30 with reference to longitudinal plane (W).
